# EUROPEAN PATENT APPLICATION

(11) **EP 3 664 447 A1**
(43) Date of publication of application: **10.06.2020**
(21) Application number: 18847330.0
(22) Date of filing: 05.05.2018
(51) Int. Cl.: H04N 13/00, G02B 27/42

(54) **STRUCTURED LIGHT PROJECTOR, THREE-DIMENSIONAL CAMERA MODULE AND TERMINAL DEVICE**

(30) Priority: 25.08.2017 CN 201710740482
(71) Applicant: Huawei Technologies Co., Ltd., Longgang District Shenzhen, Guangdong 518129 (CN)
(72) Inventor: LI, An, Shenzhen Guangdong 518129 (CN); LIU, Yingchun, Shenzhen Guangdong 518129 (CN)
(74) Representative: Goddar, Heinz J.
(86) International application number: PCT/CN2018/085755
(87) International publication number: WO 2019/037468

(57) **Abstract**

The present invention discloses a structured light projector, a three-dimensional camera module and a terminal device. The structured light projector includes a light source array, configured to emit at least two light beams; a lens array, configured to collimate the at least two light beams emitted by the light source array to obtain at least two collimated independent coherent light beams; and a diffraction optical element array, configured to modulate the at least two collimated independent coherent light beams to obtain at least two diffracted light beams. By means of the present invention, a length of a light path between the light source array and the lens array can be reduced, and therefore a height of the structured light projector can be reduced, so that a lightweight and thin structured light projector can be developed.

## Description

This application claims priority to Chinese Patent Application No. 201710740482.8, filed with the Chinese Patent Office on August 25, 2017 and entitled "STRUCTURED LIGHT PROJECTOR, THREE-DIMENSIONAL CAMERA MODULE AND TERMINAL DEVICE", which is incorporated herein by reference in its entirety.

### TECHNICAL FIELD

The present invention relates to an image processing technology, and specifically, to a structured light projector, a three-dimensional camera module and a terminal device.

### BACKGROUND

Distance information plays an important role in application in object recognition, path planning, and scene restoration. Humans can easily determine how far an obstacle is from them, but for a clumsy robot, this task becomes very difficult. As distance information becomes increasingly important in various different application fields, depth detection naturally becomes a focus of research. To obtain depth information of an object, a frequently used method is to obtain a depth map, where a pixel value of the depth map can reflect a distance between an object and a camera in a scene. Methods for obtaining a depth map can be divided into two types: passive ranging sensing and active depth sensing.

A most frequently used method in the passive ranging sensing is binocular stereo vision. In this method, two images in a same scene are simultaneously obtained by using two cameras spaced at a specific distance, corresponding pixels in the two images are found by using a stereo matching algorithm, and then, parallax information is calculated according to a trigonometric principle. The parallax information may be used to represent depth information of an object in a scene through conversion. Based on the stereo matching algorithm, the depth map of the scene may be alternatively obtained by taking a group of images at different angles in the same scene.

Compared with the passive ranging sensing, the active ranging sensing has a most obvious feature that a device itself needs to emit energy to collect depth information. This ensures that a depth map is obtained independently from a color image. In recent years, active depth sensing has been widely used in markets. Active depth sensing methods mainly include TOF (Time of Flight), structured light, laser scanning, and the like. The structured light is light having a specific pattern, and has a pattern image such as a point, a line, or a plane. A principle of obtaining a structured light-based depth map is: projecting structured light onto a scene, and capturing, by an image sensor, a corresponding image with structured light. Because a pattern image of the structured light is deformed due to a shape of the object, depth information of each point in the scene may be obtained by calculating a position of the pattern image on the captured image and a deformation degree by using a trigonometric principle. A structured light measurement technology provides high-precision and fast three-dimensional information, and has been widely used in fields such as automobiles, games, and medical care.

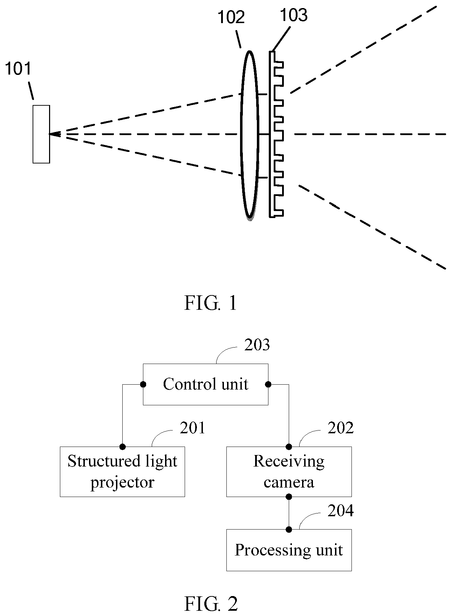

Currently, there is an increasingly strong demand for a high-precision three-dimensional (3D: three-dimension) camera module in a mobile terminal device such as a mobile phone or a tablet, and a small compact optical projector is a key component in the 3D camera module. FIG. 1 shows an existing structure of a structured light projector, including a light source 101, a lens 102, and a diffraction optical element (DOE: diffraction optical element) 103.

The light source 101 is used to emit a light beam at a preset divergence angle, the lens 102 is used to collimate the light beam emitted by the light source 101, and the DOE 103 is used to modulate a collimated light beam to obtain a diffracted light beam, so that the structured light projector can project a diffracted light beam having a preset field of view (FOV: field of view). The diffracted light beam is used to project a particular structured light image. The centers of the light source 101, the lens 102, and the DOE 103 are in a straight line. A height of the structured light projector may be determined depending on a length of a light path between the light source and the lens and a length of a light path between the lens and the DOE.

It may be learned from above that the existing structured light projector requires a relatively long light path for a projected area of the light beam emitted by the light source to reach an area with a predetermined projection diameter, namely, a diameter of the lens, causing a relatively large height of the existing structured light projector. However, mobile terminals are developing toward lightweight and thin structures, and therefore a height of the structured light projector becomes the most important factor limiting application of the structured light projector to the mobile terminals.

### SUMMARY

Embodiments of the present invention provide a structured light projector, a three-dimensional camera module, and a terminal device, where a height of the structured light projector can adapt to development of a lightweight and thin mobile terminal.

A first aspect of the invention provides a structured light projector, including:
a light source array, configured to emit at least two light beams;
a lens array, configured to collimate the at least two light beams emitted by the light source array to obtain at least two collimated independent coherent light beams; and
a DOE array, configured to modulate the at least two collimated independent coherent light beams to obtain at least two diffracted light beams.

Because the light source array emits at least two light beams, a length of a light path required for a projection area of the light beam emitted by the light source to reach an area with a predetermined projection diameter is made relatively short by using the at least two light beams, to reduce a length of a light path between the light source array and the lens array.

With reference to the first aspect, in a first implementation of the first aspect, the DOE array includes at least two independent DOEs, and the at least two independent DOEs are configured to modulate the at least two collimated independent coherent light beams.

The DOE array includes independent DOEs. Because an area of a single DOE is small, a production cost is low and a yield rate is high, thereby reducing a production cost of the DOE array.

With reference to the first implementation of the first aspect, in a second implementation of the first aspect, the at least two DOEs are obtained by using a same design algorithm; or the at least two DOEs are obtained by using different design algorithms.

When the at least two DOEs are obtained by using a same design algorithm, a design cost of the DOE array can be reduced; when the at least two DOEs are obtained by using different design algorithms, advantages of the different design algorithms can be taken into consideration, and an application scope of the DOE array can be expanded.

With reference to the first aspect, in a third implementation of the first aspect, the DOE array includes at least two DOE regions, and the at least two DOE regions are configured to modulate the at least two collimated independent coherent light beams.

When the DOE array includes at least two DOE regions, the DOE array can be produced by using integrated molding, to reduce difficulty in installing the structured light projector and improve installation efficiency.

It may be understood that in some implementations, the DOE array may include both independent DOEs and DOE regions.

With reference to the third implementation of the first aspect, in a fourth implementation of the first aspect, the at least two DOE regions are obtained by using a same design algorithm; or the at least two DOE regions are obtained by using different design algorithms.

When the at least two DOE regions are obtained by using a same design algorithm, a design cost of the DOE array can be reduced; when the at least two DOE regions are obtained by using different design algorithms, advantages of the different design algorithms can be taken into consideration, and an application scope of the DOE array can be expanded.

With reference to the second or the fourth implementation of the first aspect, in a fifth implementation of the first aspect, the design algorithm is a G-S (Gerchberg-Saxton) algorithm, or a Yang-Gu (Y-G: Yang-Gu) algorithm, or a rigorous coupled wave analysis (RCWA: rigorous coupled wave analysis) algorithm.

With reference to any one of the first aspect or the first to the fifth implementations of the first aspect, in a sixth implementation of the first aspect, the light source array includes at least two independent light sources, and the at least two independent light sources are configured to emit the at least two light beams.

The light source array includes independent light sources, to reduce a production cost of the light source array.

With reference to the sixth implementation of the first aspect, in a seventh implementation of the first aspect, the at least two independent light sources include an edge emitting laser source.

With reference to any one of the first aspect or the first to the fifth implementations of the first aspect, in an eighth implementation of the first aspect, the light source array includes at least two light emitting points, and the at least two light emitting points are configured to emit the at least two light beams.

The light source array includes light emitting points, so that the light source array can be produced by using integrated molding, and an installation cost of the structured light projector can be reduced.

With reference to the eighth implementation of the first aspect, in a ninth implementation of the first aspect, the light source array is a vertical cavity surface emitting laser that includes the at least two light emitting points.

With reference to any one of the first aspect or the first to the ninth implementations of the first aspect, in the tenth implementation of the first aspect, the lens array includes at least two independent lenses, and the at least two independent lenses are configured to collimate the at least two light beams emitted by the light source array.

The lens array includes independent lenses, to reduce a production cost of the lens array.

With reference to any one of the first aspect or the first to the ninth implementations of the first aspect, in an eleventh implementation of the first aspect, the lens array includes at least two lens regions, and the at least two lens regions are configured to collimate the at least two light beams emitted by the light source array.

When the lens array includes at least two lens regions, the lens array can be produced by using integrated molding, and the installation cost of the structured light projector can be reduced.

With reference to any one of the first aspect or the first to the eleventh implementations of the first aspect, in a twelfth implementation of the first aspect, a quantity of the at least two light beams is 9.

In practical application, the light source array, the lens array, and the DOE array can all be produced by using integrated molding, to reduce the installation cost of the structured light projector. In addition, because each array is produced by using integrated molding and a structure is relatively stable, shock resistance of the structured light projector can be improved, thereby improving durability of the structured light projector.

A second aspect of the present invention provides a three-dimensional camera module, including the structured light projector according to any one of the first aspect or the first to the twelfth implementations of the first aspect.

A third aspect of the present invention provides a terminal device, including the three-dimensional camera module provided in the second aspect of the present invention.

The terminal device may be specifically a mobile phone, a tablet, a wearable device, an augmented reality (AR: augmented reality) device, a virtual reality (VR: virtual reality) device, a vehicle-mounted device, or the like.

It may be learned from the foregoing technical solutions provided in the embodiments of the present invention that, because the structured light projector emits at least two light beams by using the light source array in the embodiments of the present invention, the length of the light path between the light source array and the lens array can be reduced, and therefore the height of the structured light projector can be reduced, so that a lightweight and thin structured light projector can be developed. This can meet a requirement for developing a lightweight and thin terminal device, facilitate application of the structured light projector to terminal devices, and promote development of the terminal devices.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a structural diagram of a structured light projector in the prior art;
FIG. 2 is a structural diagram of a three-dimensional camera module according to an embodiment of the present invention;
FIG. 3 is a structural diagram of a structured light projector according to an embodiment of the present invention;
FIG 4 is a schematic diagram of light beam projection diameters and light path lengths according to an embodiment of the present invention;
FIG. 5 is a schematic structural diagram of a light source array according to an embodiment of the present invention;
FIG. 6 is a schematic structural diagram of a light source array according to another embodiment of the present invention; and
FIG. 7 is a schematic structural diagram of a lens array according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A structured light projector provided in an embodiment of the present invention is applied to a 3D camera module, as shown in FIG. 2. A structure of the 3D camera module provided in this embodiment of the present invention is shown in FIG. 2, and includes:

The structured light projector 201 is configured to project a preset structured light image, where structured light is light having a specific pattern, and has a pattern image such as a point, a line, or a plane.

The receiving camera 202 is configured to receive a reflected image, on an object, of the structured light image projected by the structured light projector 201. The receiving camera 202 mainly includes an imaging lens, a light filter, an image sensor, and the like.

The control unit 203 is configured to control the structured light projector 201 to project the structured light image, and control signal synchronization between the structured light projector 201 and the receiving camera 202.

When the control unit 203 controls the structured light projector 201 to project the structured light image, a switch of an optical source in the structured light projector 201 and frequency of switching on/off the optical source may be specifically controlled, to control the frequency and a specific occasion of projecting the structured light image by the structured light projector 201. Because the light speed is high, an occasion on which the receiving camera 202 receives a reflected image is fleeting. Therefore, signal synchronization controlled by the control unit 203 between the structured light projector 201 and the receiving camera 202 can ensure that the receiving camera 202 can receive a reflected image in a timely manner after the structured light projector 201 projects the structural light image.

The processing unit 204 is configured to process the reflected image received by the receiving camera 202 to obtain depth information of the object. The depth information obtained by the processing unit 204 may be invoked and used by another device or an application.

When processing the reflected image, specifically the processing unit 204 may first preprocess the reflected image to obtain a preprocessed image, and then perform depth calculation based on the preprocessed image (received image) and the structured light image (transmitted image, namely, original image), to obtain the depth information of the object. The preprocessing may include denoising, enhancement, segmentation, and the like.

Because the pattern image of the structured light is deformed due to a shape of the object, the depth information of the object may be calculated by using a position of the pattern image on the reflected image and a degree of deformation according to a trigonometric principle.

The foregoing control unit 203 and processing unit 204 are divided based on functions. In practical application, the control unit 203 and the processing unit 204 may be implemented by software. To be specific, code for implementing functions of the control unit 203 and the processing unit 204 is stored in a memory, and the functions of the control unit 203 and the processing unit 204 may be implemented after a processor executes the code in the memory.

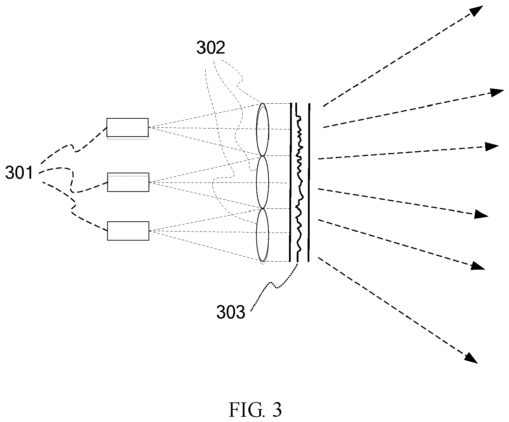

A structure of the structured light projector 201 provided in an embodiment of the present invention is shown in FIG. 3, and includes:

The light source array 301 is configured to emit at least two light beams.

A specific quantity of light beams may be determined according to a height of the structured light projector 201. A smaller height of the structured light projector indicates a larger quantity of light beams. A specific quantity of light beams may be alternatively determined according to a shape of a structured light image that the structured light projector needs to project. If the structured light image is a square-shaped image, the quantity of light beams may be n×n. If the structured light image is a rectangular image, the quantity of light beams may be n×m, where n is an integer not less than 2, and m is an integer not less than 1. For example, in an implementation, the structured light image is a square-shaped image, and a value of n is 2, 3, 4, or the like. For example, there are three beams in FIG. 3. It should be noted that FIG. 3 is merely illustration of the quantity of light beams, instead of a limitation on the quantity of the light beams.

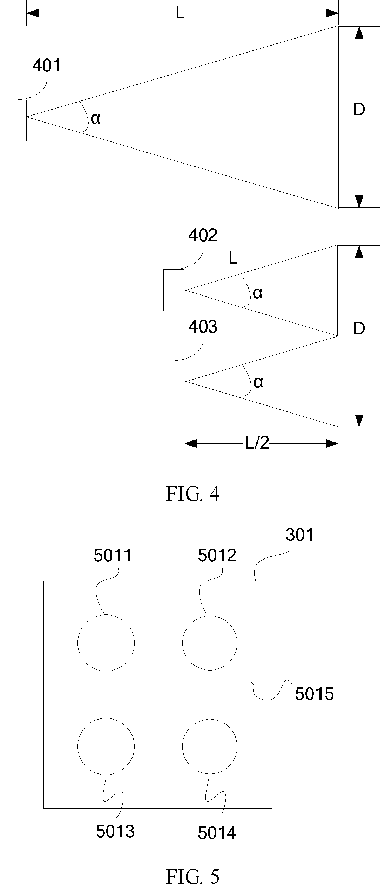

FIG 4 is a schematic diagram of light beam projection diameters and light path lengths, and shows lengths of light paths required to achieve a same projection diameter by using different quantities of light sources when the light source emits a light beam at a fixed divergence angle. As shown in FIG. 4, a light source 401, a light source 402 and a light source 403 each emit a light beam by using a divergence angle α. The light source 401 separately implements a projection with a projection diameter of D, and a light path length is L. The light source 402 and the light source 403 jointly implement a projection with a projection diameter of D, the two light sources each need only to implement a projection with a projection diameter of D/2, and accordingly, a light path length of each of the two light sources is only L/2. It may be learned that when a projection diameter and a light source divergence angle are fixed, a larger quantity of light sources indicates a smaller light path length and a smaller height of a corresponding structured light projector. However, a larger quantity of light sources indicates a higher cost of the light sources, and therefore a balance between the height and cost of the structured light projector may be comprehensively considered in practical application.

In an implementation, the light source array 301 includes at least two independent light sources. FIG. 5 shows a structure of the light source array 301 according to an embodiment of the present invention. As shown in FIG. 5, the light source array 301 includes four independent light sources: a light source 5011, a light source 5012, a light source 5013, and a light source 5014. The four independent light sources may be fastened onto a light source array board 5015, and the light source array board 5015 is configured to fasten a light source. In an implementation, the light source array board 5015 and the light sources 5011 to 5014 may be delivered as a whole. In other words, a light source manufacturer produces the light source array board and the light sources. In another implementation, a structured light projector manufacturer may produce or purchase the light source array board 5015, a light source manufacturer needs only to produce light sources, and the structured light projector manufacturer assembles a light source array. The light sources 5011 to 5014 may be laser light sources. For example, in an implementation, the light sources 5011 to 5014 may be edge emitting laser (EEL: edge emitting laser) light sources.

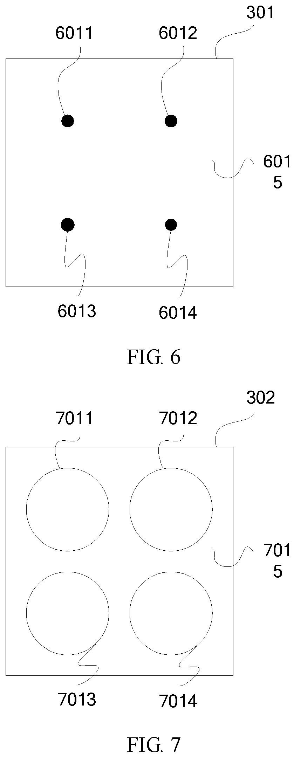

In another implementation, the light source array 301 is produced by using integrated molding and may include at least two light emitting points. FIG. 6 shows a structure of the light source array 301 according to an embodiment of the present invention. As shown in FIG. 6, the light source array 301 includes four light emitting points: a light emitting point 6011, a light emitting point 6012, a light emitting point 6013, and a light emitting point 6014. The four light emitting points may be fastened onto a light source array board 6015. In an implementation, the light source array 301 may be specifically a vertical cavity surface emitting laser (VCSEL: vertical cavity surface emitting laser). In this implementation, the light source array 301 occupies less space, so that space of the structured light projector 201 can be reduced, and assembly of the structured light projector 201 is simpler.

The lens array 302 is configured to collimate the at least two light beams emitted by the light source array 301 to obtain at least two collimated independent coherent light beams.

Because the at least two light beams emitted by the light source array 301 are divergent, if the at least two light beams are not collimated, the at least two light beams may meet sooner or later, thereby causing interference. To avoid interference between the at least two light beams emitted by the light source array 301, the lens array 302 collimates the at least two light beams before the at least two light beams meet, to obtain at least two collimated independent coherent light beams. Light paths of the at least two collimated independent coherent light beams are parallel and do not overlap. Therefore, the at least two collimated independent coherent light beams do not meet, and no interference is caused.

In an implementation, the lens array 302 may include at least two independent lenses, and the at least two independent lenses collimate the at least two light beams emitted by the light source array 301. One lens collimates one light beam, that is, a quantity of lenses included in the lens array 302 is the same as a quantity of light sources/light emitting points included in the light source array 301. FIG. 6 shows a structure of the lens array 302 according to an embodiment of the present invention. As shown in FIG. 7, the lens array 302 includes four independent lenses: a lens 7011, a lens 7012, a lens 7013, and a lens 7014. The four independent lenses can be fastened onto a lens array board 7015, and the lens array board 7015 is configured to fasten a lens.

In another implementation, the lens array 302 is produced by using integrated molding, and may include at least two lens regions, and the at least two lens regions collimate the at least two light beams emitted by the light source array 301. One lens region collimates one light beam, that is, a quantity of lens regions included in the lens array 302 is the same as a quantity of light sources/light emitting points included in the light source array 301. When the lens array 302 is produced by using integrated molding, because an assembly operation of fastening a lens onto a lens array board is not required, difficulty in assembling the structured light projector 201 can be reduced, and the assembly efficiency can be improved.

The DOE array 303 is configured to modulate the at least two collimated independent coherent light beams to obtain at least two diffracted light beams.

A DOE is an element that is directly fabricated from an optical material, with a surface embossed, by using a computer-designed diffraction pattern and a microelectronic processing technology based on a light diffraction principle, to flexibly control a wavefront phase and light deflection. Specifically, when the DOE modulates an independent coherent light beam, the DOE may specifically process, for example, shape, split, and expand the independent coherent light beam.

Light paths of different diffracted light beams do not overlap by designing the DOE array, and therefore no interference is caused. The at least two diffracted light beams correspond to two smaller-FOV structural photon images, and two smaller-FOV structural photon images may be combined into one larger-FOV structured light image. The at least two diffracted light beams are reflected upon meeting an object, and the reflected image may be received by the receiving camera 202.

In an implementation, the DOE array 303 may include at least two independent DOEs, and the at least two independent DOEs modulate the at least two collimated independent coherent light beams. The at least two independent DOEs may be determined by using a same design algorithm, or may be determined by using different design algorithms. There may be a gap or no gap between the at least two independent DOEs.

In another implementation, the DOE array 303 may include at least two DOE regions, and the at least two DOE regions modulate the at least two collimated independent coherent light beams. The DOE array 303 may be an integral DOE, and however, different regions of the DOE are configured to modulate different independent coherent light beams. There may be a gap or no gap between the at least two DOE regions. The at least two DOE regions may be determined by using a same design algorithm, or may be determined by using different design algorithms.

It should be noted that, when the DOE array 303 includes at least two DOE regions, the DOE array may be physically one DOE, and the at least two DOE regions are merely functionally divided. In other words, one DOE area is configured to modulate an independent coherent light beam collimated by one lens/lens region.

During design of a DOE region/DOE, an existing mature DOE design algorithm may be used, for example, a G-S (Gerchberg-Saxton) algorithm, or a Yang-Gu (Y-G: Yang-Gu) algorithm, or a rigorous coupled wave analysis (RCWA: rigorous coupled wave analysis) algorithm.

A center of a specific light source/light emitting point in a light source array, a center of a lens/lens region, corresponding to the specific light source/light emitting point, in a lens array, and a center of a DOE/DOE region, corresponding to the specific light source/light emitting point, in a DOE array are in a straight line. The lens/lens region, corresponding to the specific light source/light emitting point, in the lens array means a lens/lens region configured to collimate a light beam emitted by the specific light source/light emitting point, and the DOE/DOE region, corresponding to the specific light source/light emitting point, in the DOE array means a DOE/DOE region configured to modulate an independent coherent light beam collimated by the corresponding lens/lens region.

It may be learned that the structured light projector in this embodiment of the present invention emits at least two light beams by using the light source array, to reduce a length of a light path between the light source array and the lens array. Therefore, a height of the structured light projector can be reduced, so that a lightweight and thin structured light projector can be developed. This can meet a requirement for developing a lightweight and thin terminal device, facilitate application of the structured light projector to terminal devices, and promote development of the terminal devices.

An embodiment of the present invention further provides a three-dimensional camera module, and the three-dimensional camera module includes the structured light projector provided in the foregoing embodiment of the present invention.

An embodiment of the present invention further provides a terminal device, including the three-dimensional camera module provided in the foregoing embodiment of the present invention. The terminal device may be specifically a mobile phone, a tablet, a wearable device, an augmented reality (AR: augmented reality) device, a virtual reality (VR: virtual reality) device, a vehicle-mounted device, or the like.

Specific examples are used in this specification to describe the principle and implementations of the present invention. The descriptions of the foregoing embodiments are merely intended to help understand the present invention. In addition, with respect to the implementations and the application scope, modifications may be made by a person of ordinary skill in the art according to the embodiments of the present invention. Therefore, this specification shall not be construed as a limitation on the present invention.

## Claims

1. A structured light projector, comprising:
a light source array, configured to emit at least two light beams;
a lens array, configured to collimate the at least two light beams emitted by the light source array to obtain at least two collimated independent coherent light beams; and
a diffraction optical element array, configured to modulate the at least two collimated independent coherent light beams to obtain at least two diffracted light beams.

2. The structured light projector according to claim 1, wherein the diffraction optical element array comprises at least two independent diffraction optical elements, and the at least two independent diffraction optical elements are configured to modulate the at least two collimated independent coherent light beams.

3. The structured light projector according to claim 2, wherein the at least two diffraction optical elements are obtained by using a same design algorithm.

4. The structured light projector according to claim 1, wherein the diffraction optical element array comprises at least two diffraction optical element regions, and the at least two diffraction optical element regions are configured to modulate the at least two collimated independent coherent light beams.

5. The structured light projector according to claim 4, wherein the at least two diffraction optical element regions are obtained by using a same design algorithm.

6. The structured light projector according to claim 3 or 5, wherein the design algorithm is a G-S algorithm, or a YG algorithm, or an RCWA algorithm.

7. The structured light projector according to any one of claims 1 to 6, wherein the light source array comprises at least two independent light sources, and the at least two independent light sources are configured to emit the at least two light beams.

8. The structured light projector according to claim 7, wherein the at least two independent light sources each comprise an edge emitting laser source.

9. The structured light projector according to any one of claims 1 to 6, wherein the light source array comprises at least two light emitting points, and the at least two light emitting points are configured to emit the at least two light beams.

10. The structured light projector according to claim 9, wherein the light source array is a vertical cavity surface emitting laser that comprises the at least two light emitting points.

11. The structured light projector according to any one of claims 1 to 10, wherein the lens array comprises at least two independent lenses, and the at least two independent lenses are configured to collimate the at least two light beams emitted by the light source array.

12. The structured light projector according to any one of claims 1 to 10, wherein the lens array comprises at least two lens regions, and the at least two lens regions are configured to collimate the at least two light beams emitted by the light source array.

13. The structured light projector according to any one of claims 1 to 12, wherein a quantity of the at least two light beams is 9.

14. A three-dimensional camera module, comprising the structured light projector according to any one of claims 1 to 13.

15. A terminal device, comprising the three-dimensional camera module according to claim 14.
